# EUROPEAN PATENT APPLICATION

(11) **EP 1 134 964 A2**
(43) Date of publication of application: **19.09.2001**
(21) Application number: 01106146.2
(22) Date of filing: 13.03.2001
(51) Int. Cl.: H04N 1/00, H04N 1/32

(54) **Encrypted data signal, data storage medium, data signal playback apparatus, and data signal recording apparatus**

(30) Priority: 14.03.2000 JP 2000070020
(71) Applicant: MATSUSHITA ELECTRIC INDUSTRIAL CO., LTD., Kadoma-shi, Osaka 571-8501 (JP)
(72) Inventor: Nagai, Takahiro, Osaka-shi, Osaka 535-0031 (JP); Ishihara, Hideshi, Katano-shi, Osaka 576-0054 (JP); Fukushima, Yoshihisa, Osaka-shi, Osaka 536-0008 (JP)
(74) Representative: Eisenführ, Speiser & Partner

(57) **Abstract**

Playing a data signal from an illegally produced data storage medium can be effectively disabled regardless of the type of storage medium so that copying can be prevented effectively at low cost. An encrypted data signal encrypting a copy-controlled data signal has superimposed thereto as a digital watermark identification data identifying the data signal as an encrypted signal. A data storage medium records this encrypted data signal, a data signal player reproduces the signal, and a data signal recorder records the signal.

## Description

### BACKGROUND OF THE INVENTION

### 1. Field of the Invention

The present invention relates to technology for restricting the unauthorized duplication of a data signal containing digitized copyrighted material, including video and audio data, when recording to a data storage medium, and to technology for restricting playback from a data storage medium containing unauthorized copies of such copyrighted material.

### 2. Description of Related Art

Copyright infringement resulting from the unauthorized duplication of digital content has become a major problem in conjunction with widespread distribution of digital content. Various methods have been devised to prevent such unauthorized duplication, including adding copy control data for controlling duplication of digital content, and encrypting the data signal using encryption technology so that decoding (interpretation) is not possible on devices other than those that have been specifically licensed. There are also techniques for embedding such copy control data as a digital watermark in the data signal. Digital watermark data is superimposed as noise to the data signal and cannot be easily overwritten. It is therefore possible using a digital watermark to control reproduction and recording even when the copy control data is improperly overwritten.

Information added to a data signal to control copying has four states: "copy free" enabling duplication at will, "one copy" allowing only one copy to be made, "no more copy" prohibiting further copies from being made, and "never copy" prohibiting any copies from being made. These four states can be used to identify the copy generation and copy restriction state of the data signal.

Copying is restricted as follows. The recorder first checks the copy control data containing in the video, audio, or other data signal, and restricts recording if the copy control data is set to "no more copy" or "never copy". This enables copy generation control. Recorders that do not check the copy control data, however, can still record a data signal set to "no more copy" to a data storage medium, and the recorded data signal is identical to the original signal containing the copy control data It is therefore not possible to assure copyright protection.

Japanese Patent Laid-open Publication (*kokai*) 11-353796 teaches technology for resolving this problem by superimposing a digital watermark on the data signal and overwriting the state indicated by the digital watermark when reproducing the data signal, thereby effectively disabling playback from an improperly recorded data storage medium.

This is described more specifically below. Note that "compliant" as used herein means compatible, and "non-compliant" means not compatible, with the digital watermark interpreting or writing process.

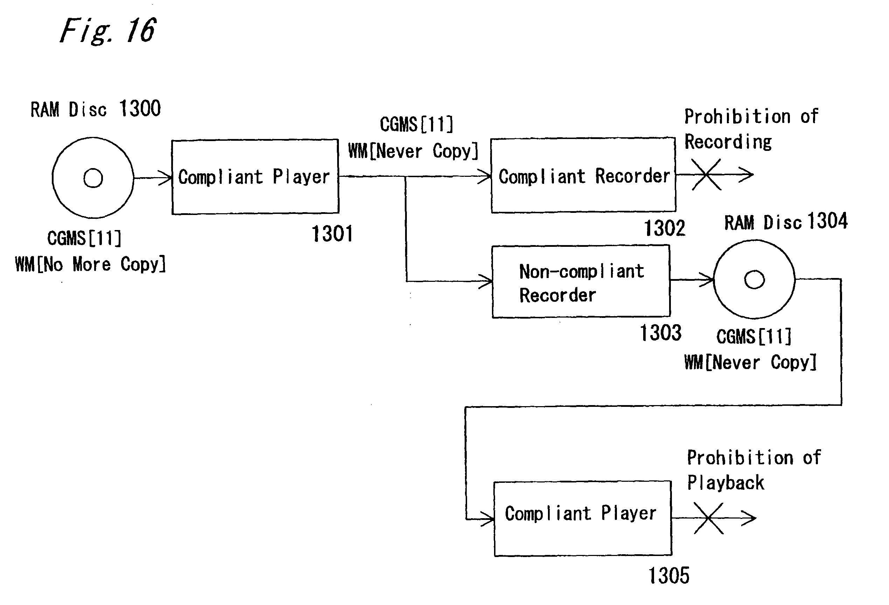

Fig. 16 shows the principle of a conventional copy control scheme. Copy control data (CGMS[11]) indicating "no more copy", and a digital watermark likewise indicating "no more copy" (WM[No More Copy]), are superimposed to the data signal recorded to RAM disk 1300 (such as a DVD-RAM disc). When playing back this data signal, a compliant player 1301 rewrites the digital watermark from "no more copy" to "never copy", superimposes the updated digital watermark to the data signal, and outputs the resulting data signal as the playback signal. The "no more copy" state is typically used with DVD-RAM media to prohibit copying, and "never copy" is not used. A compliant recorder 1302 therefore does not record the data signal when it detects a digital watermark set to a "never copy" state superimposed to the data signal. Copying can thus be controlled.

A non-compliant recorder 1303, however, ignores the digital watermark and proceeds to record the data signal to a separate RAM disc 1304 even though the digital watermark of the improperly recorded RAM disc 1304 is set to "never copy". A compliant player 1305 can therefore recognize RAM disc 1304 as an improperly recorded disc by reading the digital watermark, and thus effectively disable playback.

As noted above, a conventional compliant player 1301 rewrites the content of the digital watermark from "no more copy" to "never copy" in order to control copying. The player must therefore be equipped with a means for rewriting the digital watermark, and this increases player cost.

The conventional technology described above also cannot be used with DVD-ROM media. This is because the digital watermark used for determining whether a DVD-ROM medium is improperly recorded is normally set to "never copy".

With consideration for the above problems, the present invention is directed to effectively and at low cost preventing copying regardless of the type of data storage medium by effectively disabling playback of a data signal from an improperly produced data storage medium.

### SUMMARY OF THE INVENTION

To achieve this object, copy generation management according to the present invention in a data storage medium recording a data signal requiring copy control superimposes a scramble flag as a digital watermark to the copy-controlled data signal on the storage medium. The data signal is at least either a data signal restricted from being further copied or from absolutely any copying, the scramble flag in the digital watermark shows that the data signal is recorded scrambled, and the data signal is scrambled after the digital watermark is superimposed.

The data signal recording and playback apparatus of the invention is a data playback apparatus for reading a data storage medium recording a data signal that is prohibited from further copying or from absolutely any copying, has a digital watermark containing a scramble flag indicating that the signal is recorded scrambled to the recording medium, and is recorded after the data signal and superimposed digital watermark are scrambled. The data signal recording and playback apparatus has a data reading means for reading data from the data storage medium; a descrambler for descrambling the scrambling applied to the data signal; a digital watermark detector for detecting the scramble flag superimposed as a digital watermark in the descrambled data signal; and a playback controller for reading the digital watermark and detecting whether the descrambler is operating, and prohibiting normal playback of the data signal at least when the scramble flag in the digital watermark is set to "scrambled" and the descrambler does not operate.

A data recorder according to the present invention is a recorder for writing to a data storage medium a data signal containing copy control data set to a "one copy", "no more copy", or "never copy" state. The data recorder has means for detecting the copy control data; a digital watermark rewriting means for superimposing to the data signal as a digital watermark a scramble flag indicating that the data signal is recorded scrambled to the data storage medium when the detected copy control data is set to "one copy"; a scrambler for scrambling the data signal with superimposed digital watermark; and a data writing means for writing the scrambled data signal to the data storage medium.

A data recorder according to the present invention is a recorder for writing to a data storage medium a data signal containing copy control data set to a "one copy", "no more copy", or "never copy" state. The data recorder has a copy control data detector for detecting the copy control data; a digital watermark detector for detecting the digital watermark superimposed to the data signal; and a recording controller for prohibiting recording when a scramble flag indicating that the data signal is recorded scrambled is detected as the digital watermark.

It is therefore possible to restrict improperly recording the descrambled data signal to another data storage medium, and restrict playback from a data storage medium of a different type to which the signal was illegally copied.

Furthermore, because the data playback device of the present invention does not rewrite the digital watermark, it is not necessary to provide means for rewriting the digital watermark. The data playback device can therefore be achieved at a low cost.

Other objects and attainments together with a fuller understanding of the invention will become apparent and appreciated by referring to the following description and claims taken in conjunction with the accompanying drawings.

### BRIEF DESCRIPTION OF THE DRAWINGS

First and second embodiments of the present invention will now be described hereinafter by way of example and with reference to the appended drawings, in which:
Fig. 1 shows a copy generation managing method according to a first preferred embodiment of the present invention;
Fig. 2 shows data flow when reading or writing a scrambled data signal;
Fig. 3 shows the configuration of a compliant recorder;
Fig. 4 shows the recording process of the recorder shown in Fig. 3;
Fig. 5 shows the configuration of a compliant player;
Fig. 6 shows the reproduction process of the compliant player shown in Fig. 5;
Fig. 7 shows the configuration of a compliant recorder achieved by means of a personal computer (PC) recording system;
Fig. 8 shows the process run by the controller of the PC encoder shown in Fig. 7;
Fig. 9 shows the process run by the controller of the PC recorder (drive) shown in Fig. 7;
Fig. 10 shows the configuration of a compliant player achieved by means of a personal computer (PC) reproduction system;
Fig. 11 shows the process run by the controller of the PC player (drive) shown in Fig. 10;
Fig. 12 shows the process run by the controller of the PC decoder shown in Fig. 10;
Fig. 13 shows the data flow for transferring disc type information;
Fig. 14 shows the authentication process and data transfer procedure when the reproduction system plays back a DVD-ROM disc;
Fig. 15 shows the authentication process and data transfer procedure when the reproduction system plays back a DVD-R disc; and
Fig. 16 shows the principle of a conventional copy control scheme.

### DETAILED DESCRIPTION OF THE PREFERRED EMBODIMENTS

The preferred embodiments of an encrypted data signal, data storage medium, data signal reproduction apparatus, and data signal recording apparatus according to a preferred embodiment of the present invention are described below with reference to the accompanying figures.

In this preferred embodiment of the invention the data storage medium is an optical disc such as a DVD-RAM or DVD-ROM disc and the data signal is recorded to the optical disc. The data to which copy control is applied is an audio/video (AV) signal containing audio and video content.

A recordable DVD is further referred to as a RAM disc and a playback-only DVD is called a ROM disc.

In addition, a recorder and player that implements the copy generation restriction process further described below are called "compliant" devices, and devices that do not implement this copy generation restriction process are called "non-compliant" devices.

### Embodiment 1

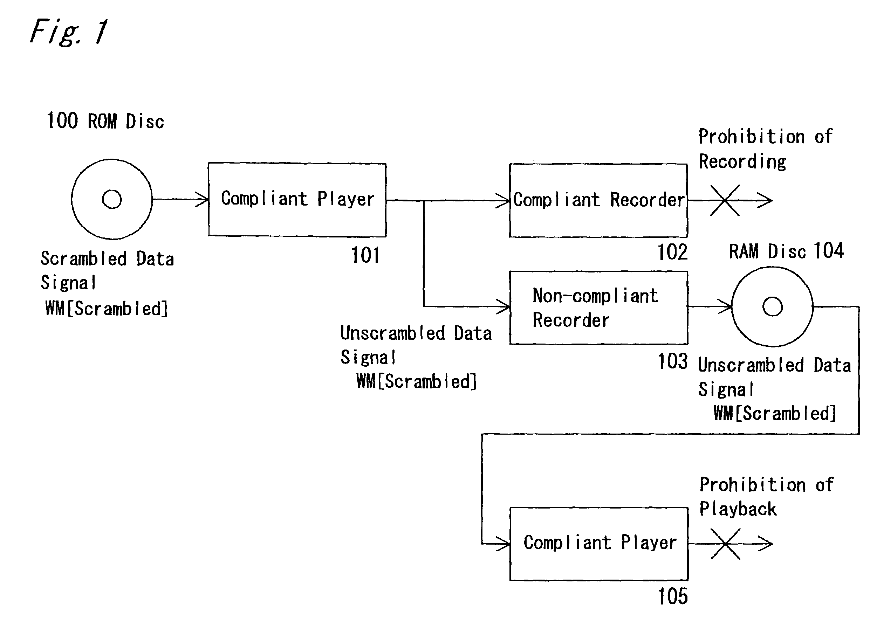

Fig. 1 shows a copy generation management method according to a preferred embodiment of the present invention. A video, audio, or other data signal is recorded to ROM disc 100 in this exemplary embodiment, but a RAM disc can be used instead of a ROM disc 100.

A data signal used in this preferred embodiment is described first below. A digital watermark is embedded as noise to the audio, video, and other components of the data signal. The primary features of a digital watermark are that the digital watermark is not eliminated by editing, compressing, or decompressing the copyrighted material; the digital watermark is embedded so that the digital watermark is virtually indiscernible to the human eye and ear; and the quality of the original copyrighted material is maintained even after the digital watermark is embedded. These characteristics make it possible to prevent improperly overwriting, playback control, and recording control.

Copy control data (not shown in the figure) is also recorded in the data signal. This copy control data indicates whether the data signal can be copied or not. For example, the copy control data could be a two bit Copy Generation Management System (CGMS). Bit values and their meaning in the CGMS are as follow: 00 indicates a "copy free" state; 01, "one copy"; 10, "never copy"; and 11, "no more copy".

To apply copy control to a data signal so that the data signal can never be copied, for example, the method of the present invention scrambles (encrypts) the data signal prior to recording so that the signal can only be reproduced by an authorized licensed device. A characteristic process of this preferred embodiment of the invention is that a scramble flag, which indicates whether the data signal is scrambled, is set to "scrambled" in this case and superimposed to the data signal as a digital watermark WM. This scramble flag can therefore also be referred to as encryption state identification data used for determining whether the data signal is encrypted or not. Copy control using a digital watermark is described in detail below. A notable feature of this digital watermark is that the a scramble flag set to "scrambled" is not removed by modifying, compressing, or decompressing signal data, and can therefore be reliably detected. A data signal having a superimposed digital watermark can be scrambled using a specific scrambling (encryption) technique.

If copy control is not applied to a data signal so that the signal can be freely copied, for example, the data signal is simply not scrambled. In this case a digital watermark can be superimposed to the data signal or not superimposed. If a digital watermark is superimposed, the digital watermark is a scramble flag set to "not-scrambled" to indicate that the data signal is not encrypted. The recorder (not shown in the figure) records the unscrambled data signal directly to disc, or superimposes the digital watermark and then records the signal, to produce ROM disc 100.

A typical scrambling process used when producing ROM disc 100 is described first below before describing the copy generation management method of this embodiment of the invention.

The scrambling process described below is accomplished by the ROM disc 100 manufacturer using an authoring system and disc cutting system. An exemplary scrambling process is the DVD-ROM content scrambling system (CSS), a copyright protection system.

A data signal containing audio and video, for example, is encrypted using three hierarchical encryption keys. These three keys are a title key, disc key, and master key. The content encryption process of the CSS copyright protection system is described below.

It should be noted that "scramble" is used herein synonymously with "encrypt." An algorithm using one encryption key is sufficient to encrypt and scramble the data signal. A known algorithm can therefore be used, and further description of the algorithm is omitted below. It should be noted that the algorithm is often undisclosed for security purposes.

Furthermore, descrambling is the operation restoring scrambled data to the unscrambled state. Descrambling is synonymous to "interpret" and "decode."

The scrambling process is described next below. The data signal is MPEG encoded and then scrambled using a title key. The title key can be freely selected by the copyright holder, such as the movie director, for each title on the disc, that is, for each unit of the data signal. The scrambled signal data is then stored to the data recording area of the disc.

The title key is then encrypted using a disc key. The disc key can be freely selected by the copyright manager, such as the movie production company, for each disc. When there are more than one encrypted titles on a disc, the copyright manager can freely determine the disc key. Encrypted title keys are stored to a disc sector header area that the user cannot access.

Finally, the disc keys are encrypted using a master key and converted to an encrypted disc key set. The master key is assigned to each manufacturer of descrambler devices for descrambling a scrambled data signal, and is different for each manufacturer. An "encrypted disc key set" means that there is one or a plurality of encrypted disc keys. Because there are only as many master keys as there are licensed manufacturers, one or more disc keys is generated. The number of disc keys are the same as that of manufacturers. The encrypted disc key set is then stored to the disc lead-in area, which the user cannot access.

This process results in scrambled signal data, encrypted title keys, and an encrypted disc key set being stored to ROM disc 100.

A descrambling process is required to reproduce a copy controlled data signal from ROM disc 100. A license to use the specific encryption method described above, the decode key (master key), and the decoding algorithm must be obtained in order to descramble the signals. A compliant player 101 with a descrambling capability as shown in Fig. 1 can read and descramble the scrambled data signal from ROM disc 100 to obtain an MPEG decodable data signal.

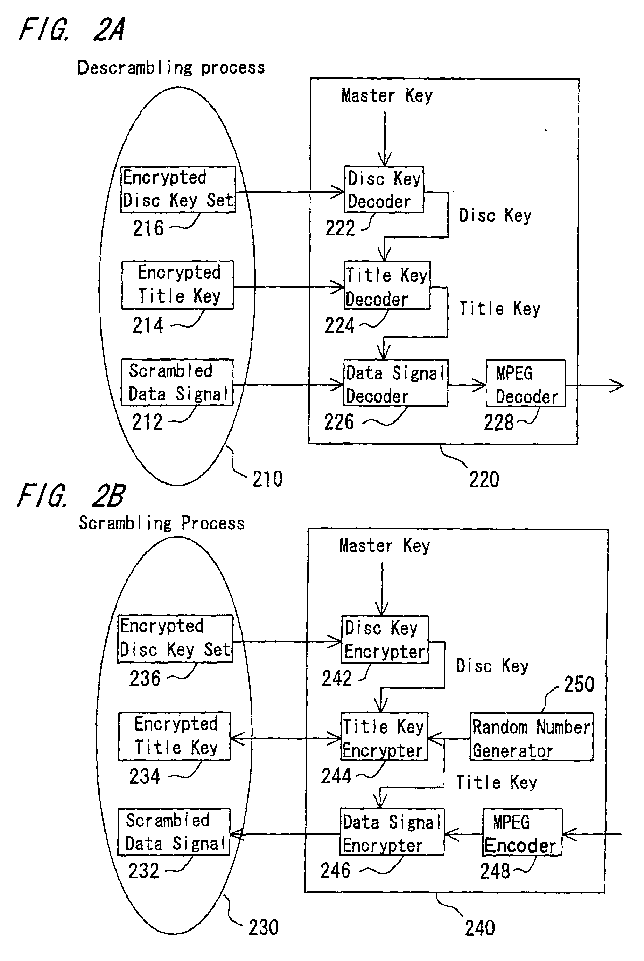

The descrambling process executed by a DVD player or other disc playing device is described first below, and the scrambling process applied by the DVD-RAM drive or other disc recording device is then described. Fig. 2 shows the data flow when reading or writing scrambled signal data.

Fig. 2A shows the concept of the descrambling process applied to a scrambled data signal recorded to disc 210. This disc 210 is a ROM disc 100 (Fig. 1) or other equivalent disc to which scrambled data signal 212, encrypted title key 214, and encrypted disc key set 216 are recorded. The scrambled data signal 212 is further assumed to be an MPEG encoded AV signal. The descrambler 220 part of the player is an MPEG decoder that descrambles and MPEG decodes the data signal. The descrambler 220 has a disc key decoder 222, title key decoder 224, data signal decoder 226, and MPEG decoder 228.

The descrambler 220 reads the encrypted disc key set 216, encrypted title key, and scrambled data signal from disc 210. The disc key decoder 222 first decodes its unique disc key from the read disc key set 216 using the master key stored to internal memory (not shown in the figure) or supplied from some other part of the player. The title key decoder 224 then decodes the encrypted title key 214 using the decoded disc key. The data signal decoder 226 then decodes the scrambled data signal 212 using the decoded title key to complete the descrambling process. Because the descrambled data signal is an MPEG encoded signal, the MPEG decoder 228 decodes the signal and outputs the AV signal data in this preferred embodiment of the invention.

This completes the description of descrambler 220 operation.

Fig. 2B shows the concept of the process for scrambling a data signal for recording to disc 230. This process is described for recording a data signal for which the copy control data is set to "one copy" by way of example only. A pre-encrypted disc key set 236 is recorded to the disc 230 used for writing by the disc manufacturer before factory shipping.

The MPEG encoder 248 of the scrambler 240 MPEG encodes the input data signal and sends the resulting MPEG data to the data signal encrypter 246. The data signal encrypter 246 then scrambles the MPEG data using the title key. The title key is a random number generated by a random number generator 250. The title key is then encrypted by the title key encrypter 244 using the disc key, and recorded to disc 230 as the encrypted title key 234. The disc key is obtained by decoding the encrypted disc key set 236 recorded to the disc 230 using the master key stored by the scrambler 240.

It should be noted that once the title key is generated and recorded to disc 230 as the encrypted title key 234, the recorded encrypted title key 234 is used for subsequent scrambling and recording of additional data signals. That is, the scrambler 240 reads and decodes the encrypted title key 234 of the disc using the disc key, and then scrambles the data signal using the title key.

It will thus be noted that the scrambler 240 can obtain the title key by two different means. More specifically, the scrambler 240 can use a random number generated by the random number generator 250 as the title key, and can decode an encrypted title key 234 recorded to the disc 230 to obtain the title key. As program distribution increases, such as with video on demand services, it is expected that broadcasters (content creators) will also generate title keys and use these title keys to scramble digital broadcasting signals for wireless distribution. In this case the title key and scrambled data signal obtained from the broadcaster will be recorded to disc.

Data signals are thus scrambled and descrambled as described above.

The principle of copy generation management by a preferred embodiment of the present invention is described next below with reference to Fig. 1.

In this embodiment of the invention a data signal to which copy control is to be applied has a scramble flag set to "scrambled" superimposed to the data signal as a digital watermark. A data signal having a "scrambled" scramble flag superimposed thereto is thus scrambled and recorded to the ROM disc 100.

A primary feature of copy generation management by an embodiment of the present invention is that the scramble state of the signal data on the disc (that is, whether the signal is scrambled or not) is compared with the scramble flag state (that is, whether the scramble flag is set to scrambled or not), and decides based on the result of this comparison whether to play or record the signal, and whether to restrict playing or recording. Whether the signal data is scrambled or not can be determined by detecting whether a specific flag in the signal data or in the data for related files is set, or whether the descrambler operated normally.

This operation is described more specifically below. First, compliant player 101 reads the scrambled signal data from ROM disc 100 and descrambles it. The compliant player 101 then detects the scramble flag from the descrambled signal data and detects whether the signal is scrambled as indicated by the scramble flag. If the signal data is scrambled and the scramble flag is set to "scrambled", the scramble state and scramble flag match. As a result, the compliant player 101 outputs a descrambled data signal. It is important to note here that a scramble flag set to "scrambled" is superimposed on the output data signal. This is because a scramble flag encoded as a digital watermark is not eliminated by the descrambling process of a compliant player 101.

A process whereby recording is restricted when an attempt is made to improperly record a data signal output from a player to a data storage medium is described next.

A compliant recorder 102 obtains a descrambled data signal from a compliant player 101. The compliant recorder 102 then recognizes that the received signal data is descrambled and the superimposed scramble flag is set to "scrambled." The compliant recorder 102 thus knows that the state of the output data signal does not match the state indicated by the scramble flag, and the compliant recorder 102 therefore does not record to a RAM disc or other data storage medium. A compliant recorder 102 can thus restrict recording the signal data.

When the data signal is not scrambled it is also enough to compare the scrambled state with the scramble flag. When a digital watermark is not detected and when the digital watermark is set to "non_scrambled" the data signal is output. Such output signals can be freely copied, and a compliant recorder 102 enables copying the data signal to a RAM disc.

The principle whereby playing is restricted when a data signal is improperly copied to a RAM disc is described next below.

A non-compliant recorder 103 receives a descrambled data signal output by a compliant player 101. The scramble flag of this data signal is set to scrambled and is therefore subject to copy control, but the non-compliant recorder 103 does not detect the digital watermark and copies the data signal to RAM disc 104. When a compliant player 105 then tries to play this RAM disc 104, it compares the scramble state as described above. In this case, however, the data signal is recorded descrambled but the superimposed scramble flag is set to "scrambled." The compliant player 105 therefore detects a mismatch between the actual signal state (descrambled) and the scramble flag state (scrambled), and recognizes that the data signal on RAM disc 104 was improperly copied. The compliant player 105 therefore prohibits playing the data signal.

Note that playback is restricted even when the signal is not recorded to a RAM disc 104. For example, playback is also restricted from a DVD-R disc, which can be written but after being written is a read-only medium.

Improper recording and playback can be prohibited with even greater security by also using a method for changing the encryption algorithm used for scrambling according to the type of recording medium. For example, by using different encryption algorithms for DVD-ROM media and DVD-RAM media, playback from a DVD-RAM disc can be prohibited when a data signal scrambled with the DVD-ROM algorithm is improperly copied from DVD-ROM to DVD-RAM media. This can be achieved by, for example, providing a table correlating recording medium type with the encryption algorithm used for each type. When the descramble circuit cannot descramble a signal using the decryption algorithm corresponding to the recording medium type, playing the data signal from an improperly copied recording medium is effectively prohibited. Type information indicating the type of recording medium can be superimposed to the data signal with the scramble flag in the digital watermark. This type information identifies the type of recording medium to be recorded. It is therefore possible to distinguish recording to DVD-R media from recording to DVD-RAM media.

This embodiment of the present invention thus superimposes encryption information indicating whether a recorded data signal is encrypted or not (that is, the "scrambled" scramble flag) as a digital watermark to a scrambled (encrypted) data signal. When the signal data is decoded, the digital watermark is not changed and remains as originally coded. A compliant recorder and player can thus detect a mismatch between the unencrypted decoded signal data and the digital watermark set to encrypted, and prohibit illegal recording to another recording medium and playback from an illegally recorded recording medium. It is therefore possible for a compliant player to prohibit playback of a disc illegally copied by a non-compliant recorder 103 even without the compliant player having a means for rewriting the digital watermark.

It should be noted that while a scramble flag (set to scrambled or non_scrambled) is superimpose to the data signal as a digital watermark in this embodiment of the invention, other information can be used insofar as it indicates the scramble state of the data signal. For example, when a data signal for which the copy control data is set to "never copy" is scrambled and then recorded, the same effect can be achieved by superimposing this copy control data to the data signal as a digital watermark.

### Recording device

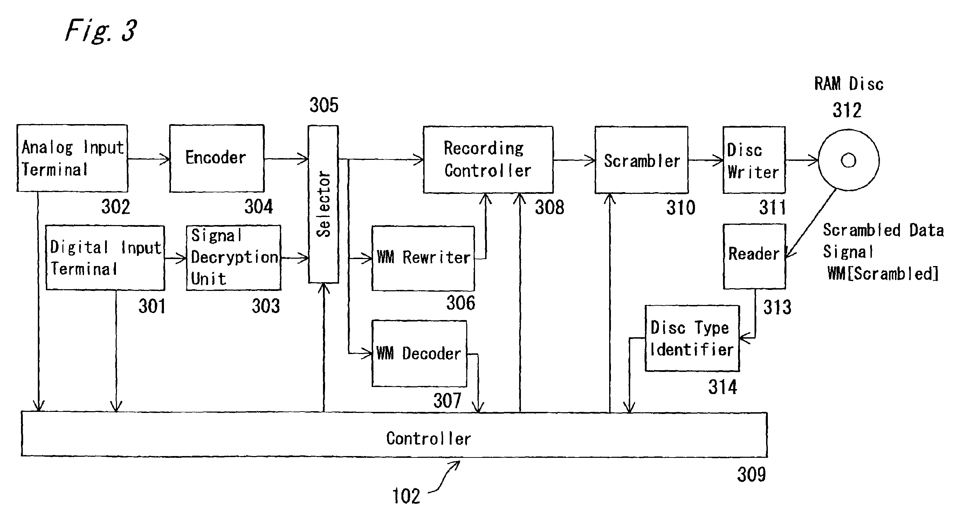

The configuration of a compliant recorder 102 is described next below with reference to Fig. 3, a block diagram of a compliant recorder 102 according to this preferred embodiment of the invention.

A compliant recorder 102 has a digital input terminal 301 and an analog input terminal 302. Digital signals such as encryption key information and analog signals such as an AV signal are input from another connected device through the digital input terminal 301 and analog input terminal 302, respectively. A signal decryption unit 303 decrypts an encrypted signal based on the encryption key information received from a device connected to the digital input terminal 301, and restores the compressed video data. Copy control data indicating whether the input data signal can be copied is also detected. This copy control data is also superimposed on the data signal.

The video data input through analog input terminal 302 is supplied from analog input terminal 302 to an encoder 304 and MPEG encoded, producing compressed video data. Copy control data indicating whether the input data signal can be copied or not is also detected at this time.

The selector 305 selects and outputs data from decryption unit 303 or data from encoder 304 based on a selection control signal corresponding to user input.

The data output from selector 305 is supplied by way of WM rewriter 306 to recording controller 308. The WM rewriter 306 performs a process for superimposing a "scrambled (RAM)" scramble flag to the data signal as a digital watermark. It should be noted that this process must be performed after identifying the recording medium type as further described below. This process of the WM rewriter 306 spectrum spreads the scramble data using a pseudonoise code stream, for example, and outputs the spectrum spread scrambled data. Methods for accomplishing this are known from the literature, and further description thereof is thus omitted below. The data output from selector 305 is supplied to WM decoder 307. The WM decoder 307 extracts the scramble data superimposed to the data signal as a digital watermark, identifies the written content, and passes the resulting output to controller 309.

Based on the copy control data detected from the input data and the digital watermark output, controller 309 determines whether the input data can be recorded (copied). If it can be recorded (copied), it determines whether overwriting the digital watermark is necessary for copy control. If it is determined that recording (copying) is prohibited, controller 309 controls recording controller 308 so that it does not record. If recording is permitted, or if making one copy is permitted, the controller 309 instructs recording controller 308 to record. The compliant recorder 102 then reads disk type information (indicating whether it is a RAM disc, write-once disc, or other type) by way of reader 313, and disc type identifier 314 detects the disk type. The content of the scramble flag is then determined based on the detected disk type, a scramble flag to be superimposed on the data signal is generated by the WM rewriter 306, and then superimposed by the recording controller 308 to the data signal. The scrambler 310 then applies a specific scrambling operation to the data signal according to the disk type, and records to RAM disc 312 by way of disc writer 311.

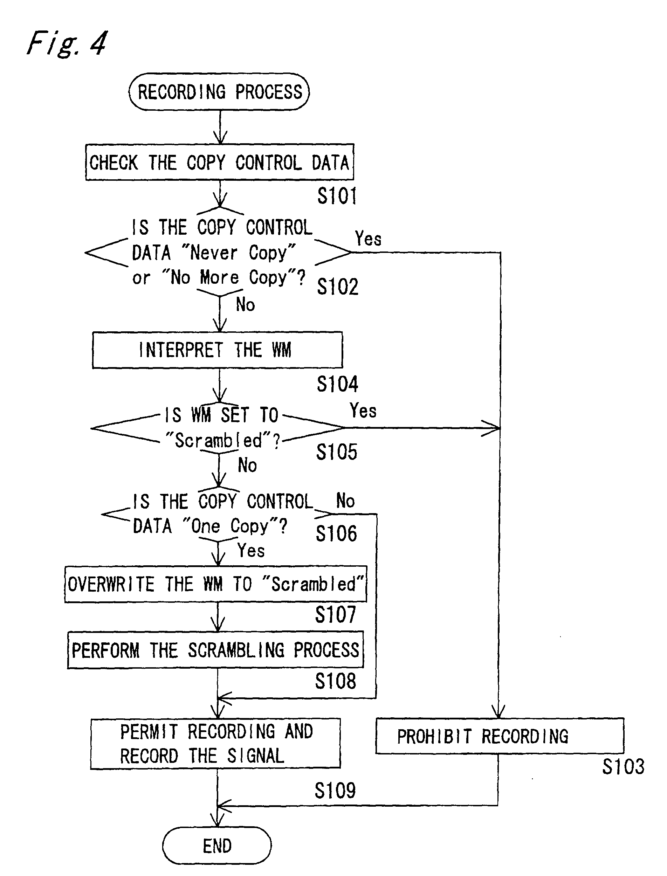

The process performed after the compliant recorder 102 completes encryption decoding is described next with reference to Fig. 4. Fig. 4 is a flow chart of the recording process of a compliant recorder 102.

The copy control data detected when a data signal is input is checked first (step S101). Whether the copy control data is set to "never copy" or "no more copy" is then determined (step S102). Recording is prohibited if the copy control data is set to either state, and the recording process is immediately terminated (step S103). Note that "never copy" indicates that copy control absolutely prohibits copying the data signal. "No more copy", however, indicates that copy control allows copyable music or video data to be duplicated only once, and then prohibits making further copies.

If neither of these states applies (that is, the copy control data is not set to "never copy" or "no more copy"), the digital watermark WM superimposed to the input signal is interpreted (step S104) to determine whether the digital watermark WM is set to "scrambled" (step S105). If it is set to scrambled, the data signal selected for recording was originally scrambled is identified as data input after the copy control data was illegally modified, and the recording process is terminated (step S103). If it is not set to scrambled, the data known to be recordable.

If the data is identified to be recordable, it is determined whether the copy control data is set to "one copy" to determine whether the data signal must be scrambled (step S106). If it is set to "one copy", the digital watermark is overwritten to "scramble (RAM)" (step S107), and the data is scrambled by applying a specified scrambling technique (step S108). The compliant recorder 102 (Fig. 3) then records the resulting data to RAM disc (step S109).

If the copy control data is not set to "one copy", that is, is set to "copy free", the signal is recorded to RAM disc without scrambling (step S109).

A RAM disc recorded by a compliant recorder 102 thus comprised records a data signal for which the copy control data is set to "one copy" with scrambling data superimposed as a digital watermark paired with scrambling the data signal.

Based on particular information read by the reader 313 (Fig. 3), the disc type identifier 314 detects the type of disc that was loaded and may record the disk type to the digital watermark. Various disk types are possible, including ROM (read-only), RAM (writable), write-once, write-1000 (writable approximately 1000 times), and write-100,000. Disc type is identified based on the physical properties of the disc (focus characteristics, tracking characteristics, read characteristics) and data from a control data area recording the disk type.

It should be noted that the scrambling process can be applied to only part of the data stream (such as to I-frames in MPEG encoded data) with consideration for the processing overhead during data playback. In this case the digital watermark must be superimposed to all data in the scrambled part of the signal.

When manufacturing ROM discs with a scrambled data signal as described above, the data recording apparatus comprises an authoring system and disc cutting system, for example. The authoring system compresses the data signal based on the data signal, and superimposes scrambled data as the digital watermark. The disc cutting system scrambles the data signal and produces a disc master. ROM discs in which copy control as described above is implemented can thus be manufactured using such a data recording apparatus.

### Reproducing apparatus

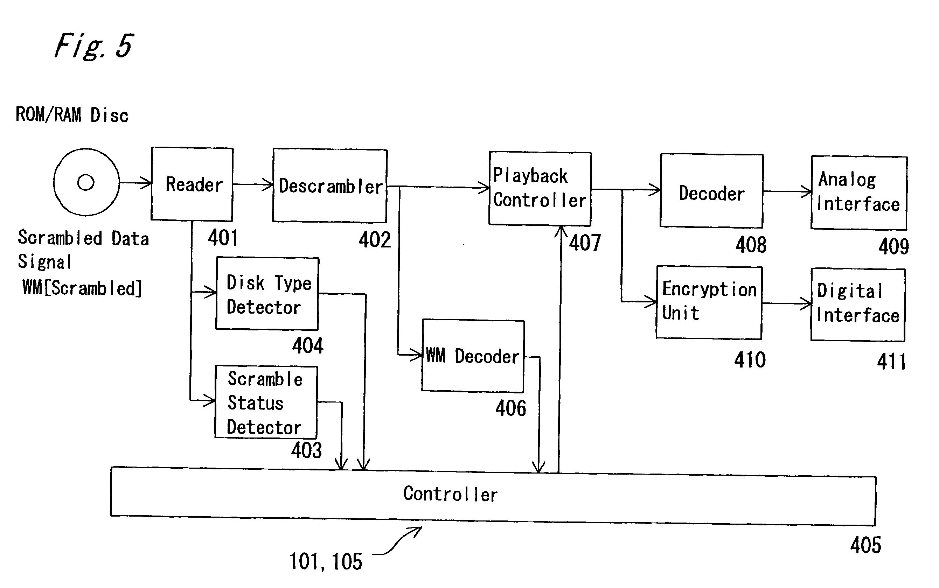

The configuration of a compliant player 105 is described next with reference to Fig. 5.

The configuration of compliant player 105 is identical to that of compliant player 101. Fig. 5 is a block diagram showing compliant player 105. The data recorded to a disc loaded into compliant player 105 is read by reader 401, and supplied therefrom to descrambler 402, scramble status detector 403, and disk type detector 404.

The scramble status detector 403 extracts the scramble flag recorded as added information to the disc and detects whether the recorded data is scrambled. The detection result is passed to controller 405. It should be noted that a specific encryption method (such as the CSS (content scrambling system) copyright protection system) is used to encrypt a ROM disc set to "never copy",

The disk type detector 404 detects the type of disc loaded into the player, and passes the result to controller 405. As noted above, the disk type indicates whether the disc is ROM (read-only), RAM (writable)., write-once, write-1000 (writable approximately 1000 times), write-100,000, or other type. Disc type is identified based on the physical properties of the disc (focus characteristics, tracking characteristics, read characteristics) and data from a control data area recording the disk type.

The descrambler 402 decodes the scrambling applied to a ROM disc by the disc manufacturer, or the scrambling applied to a RAM disc by the scrambler 240 of the disc recorder (Fig. 2B). The descrambler 402 runs the process of the descrambler 220 previously described with reference to Fig. 2A.

The descrambler 402 then passes the data output to digital watermark WM decoder 406 and playback controller 407. The digital watermark WM decoder 406 decodes the scrambled data superimposed as a digital watermark to the data signal. Note that "decode" as used here means extracting the scrambling data and evaluating its content. This is because the digital watermark is thought to be encoded superimposed as noise to the data signal. The digital watermark WM decoder 406 outputs the result to controller 405.

The controller 405 decides whether to permit or prohibit playback based on the detected disk type, scramble flag, and digital watermark content. It will be remembered that scrambling of the data signal and the content indicated by the scramble flag are a matched pair in a disc recorded by a compliant recorder 102 (Fig. 1).

Therefore, when a non-complying disc is loaded in the player, descrambler 402 supplies prohibit-playback control information to playback controller 407, and thus prohibits further signal processing by the playback controller 407 and downstream components. If the data signal is from a compliant disc, processing by the playback controller 407 and downstream components is enabled. The playback controller 407 passes the AV data to decoder 408, and decoder 408 decodes the MPEG encoded data. The analog interface 409 then D/A converts the decoded data, and supplies it to an external device. If there is a device connected to digital interface 411, encryption unit 410 encrypts the MPEG encoded data and the encrypted data is then output from digital interface 411.

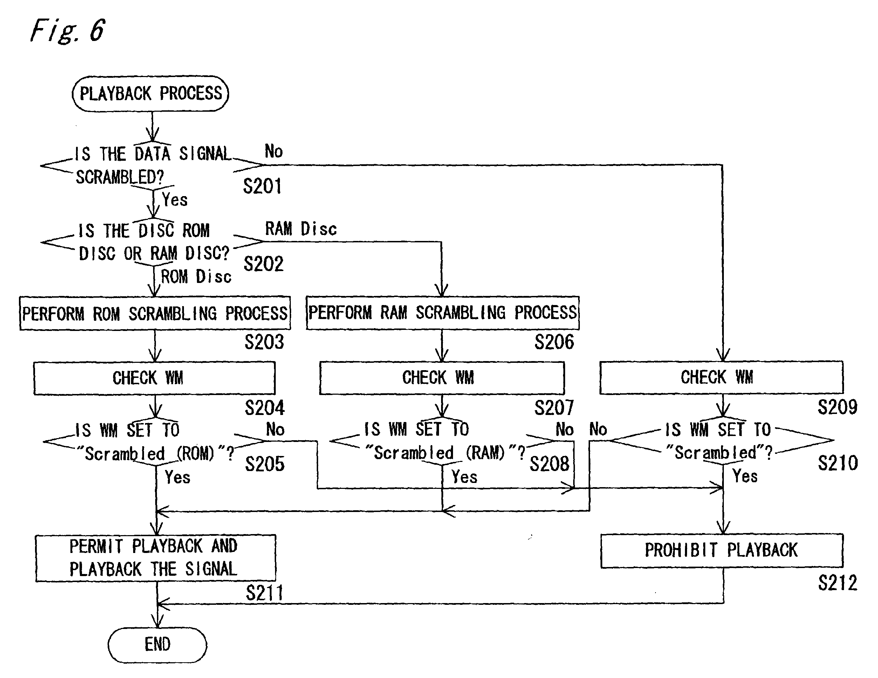

The playback process of the compliant player 105 shown in Fig. 5 is described next with reference to Fig. 6. Fig. 6 is a flow chart of the playback process.

A compliant player 105 (Fig. 5) first detects whether the data signal recorded to the loaded disc is scrambled (step S201), Data can be scrambled using the RAM disc scrambling method of the scrambler 240 of compliant recorder 102 (Fig. 2), or the method applied to a ROM disc (such as the CSS copyright protection system). Because the scrambling method differs according to disk type, disk type detector 404 (Fig. 5) checks the disk type (step S202).

If a ROM disc type is detected, descrambler 402 applies a ROM scrambling process (step S203). The digital watermark WM decoder 406 then detects whether a digital watermark WM indicating the scramble state is written to the descrambled data signal (step S204), and controller 405 (Fig. 5) determines whether the digital watermark is set to "scrambled (ROM)" (step S205). If it is, controller 405 (Fig. 5) permits playback (step S211); otherwise playback is prohibited (step S212).

If the disk type is determined in step S202 to be a RAM disc, the descrambler 402 similarly applies a RAM scrambling process (step S206). The digital watermark WM decoder 406 (Fig. 5) then detects whether a digital watermark WM indicating the scramble state is written to the descrambled data signal (step S207), and controller 405 (Fig. 5) determines whether the digital watermark is set to "scrambled (RAM)" (step S208). If it is, controller 405 (Fig. 5) permits playback (step S211); otherwise playback is prohibited (step S212).

If step S201 determines that the disc is not scrambled, the data signal is sent to the digital watermark WM decoder 406 (Fig. 5) without descrambler 402. running the descrambling process. The digital watermark WM decoder 406 (Fig. 5) then detects the digital watermark WM (step S209) and controller 405 detects whether the watermark is set to "scrambled" (step S210). If the digital watermark WM is set to "scrambled", controller 405 prohibits playback (step S212), and otherwise permits playback (step S211). Note that "otherwise" here refers to cases when the digital watermark is not detected, and when the detected digital watermark is set to "non_scrambled."

In other words, if the disc is recorded by a compliant recorder 102 (Fig. 1), the data signal is scrambled before being recorded if the digital watermark WM is set to scrambled. However, if the digital watermark WM is set to "scrambled" but the signal is not scrambled, it is known that the data signal was illegally copied. This applies when the output of a compliant player 101 (Fig. 1) is recorded to a disc by a non-compliant recorder 103 (Fig. 1), and when a scrambled data signal is illegally descrambled and recorded to disc.

It is therefore possible to prohibit playback in such cases if a compliant recorder 102 (Fig. 1, Fig. 3) and compliant player 101, 105 (Fig. 1, Fig. 5) according to the present invention are used. It is therefore possible to prevent illegal copying, and to keep the cost of the playback device down, without providing a rewriting means for overwriting a digital watermark in the disc player.

It should be noted that if only part of the data signal is scrambled, it is necessary to check the embedded scramble flag and determine whether the descrambling process of the descrambler 402 is completed normally. This makes it possible to prohibit playback when the scramble flag of an illegally duplicated data signal is illegally rewritten to "scrambled".

It will be obvious to one with ordinary skill in the related art that while the data signal is encrypted in this embodiment by scrambling, the same effects can be achieved using other encryption methods.

Furthermore, while an optical disc is used by way of example as the data storage medium in this embodiment, the same effects can also be achieved using other types of storage, including semiconductor memory and magnetic storage media (such as a hard disk).

### Embodiment 2

The compliant recorder 102 (Fig. 1 and Fig. 3) and compliant player 101, 105 (Fig. 1, Fig. 5) are described above in the first embodiment as comprising thereinside a block (disc writer 311 (Fig. 3) and reader 401 (Fig. 5)) for recording a data signal to disc or reproducing a data signal from disc, a block (WM decoder 307 (Fig. 3) and 406 (Fig. 5)) for detecting a digital watermark, and a block (encoder 304 (Fig. 3) and decoder 408 (Fig. 5)) for compressing and decompressing the data signal.

However, if the functions of the disc recorder and disc player are achieved in a personal computer, for example, the drive for reading and writing a data signal, and the encoder/decoder are generally achieved in separate devices.

When these functions are achieved in discrete devices, the decoder controls playback based on the disk type detected by the drive. It is therefore possible to improperly change the disk type and playback an improperly copied disc. More specifically, if a data signal recorded to a ROM disc is recorded to a RAM disc by a non-compliant recorder and is then played back, illegal software intercedes between the drive and decoder, and the disk type detected by the drive can be changed to "ROM." As a result, playback of ROM disc content illegally copied to a RAM disc cannot be prevented as in a compliant player 101, 105 (Fig. 1).

This second embodiment of the invention describes a configuration whereby playback can be prevented in such circumstances.

### Personal computer as a recording device

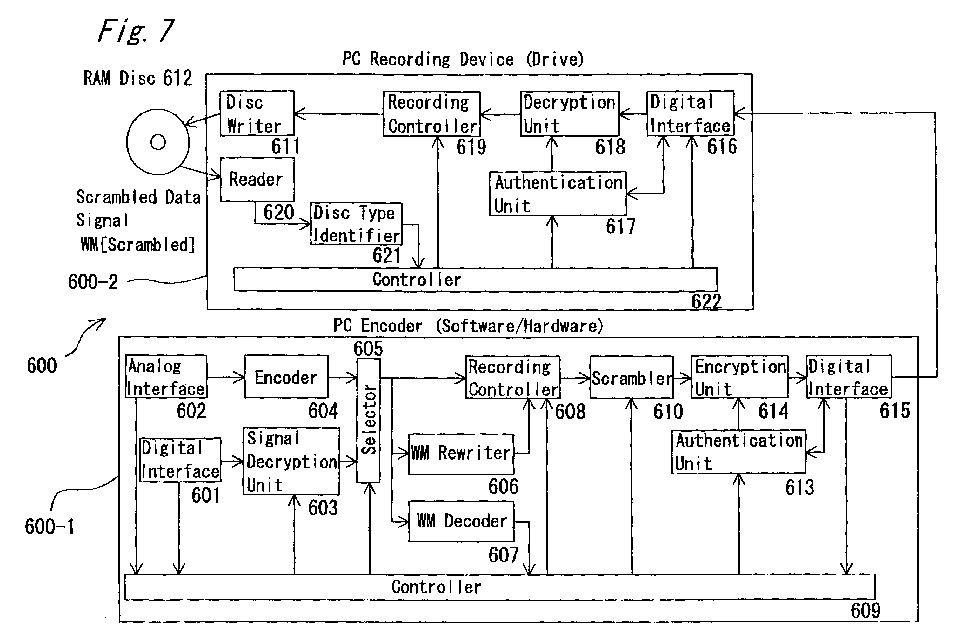

Fig. 7 shows a compliant recorder achieved in a personal computer (PC) recording system 600. As shown in Fig. 7, the major components of this compliant PC recording system 600 are PC encoder 600-1 and PC recording device (drive) 600-2. A digital interface (such as SCSI, ATAPI, or IEEE 1394) capable of preventing illegal copying connects the PC encoder 600-1 and PC recording device (drive) 600-2. The PC encoder 600-1 is equivalent to the components of a compliant recorder 102 (Fig. 3) from the interface terminals 301 and 302 to the scrambler 310, and performs the same operations. Further description of like operation is therefore omitted below. The PC recording device (drive) 600-2 is equivalent to the disc writer 311 (Fig. 3).

How the operation of this PC encoder 600-1 differs from the operation achieved by the components from the interface terminals 301 and 302 to the scrambler 310 of the compliant recorder 102 shown in Fig. 3 is described below. When a "one copy" data signal is to be recorded to a RAM disc, the scrambler 610 of the PC encoder 600-1 applies a specific scrambling method to the data signal. So that the key used for scrambling can be safely shared by the PC recorder drive and PC encoder, authentication units 613, 617 are mutually authenticated by way of digital interfaces 615, 616. If authentication is successful, authentication unit 613 and authentication unit 617 in the PC recorder drive each confirm that the other is a licensed device, that is, is a compliant device. If authentication is successful, a pass key for encrypting the data sent to the digital interface is also shared. Using this shared bus key, the encryption unit 614 of the PC encoder encrypts the data requiring protection (including key data and signal data), and sends the encrypted data to the PC recording device (drive) 600-2 through digital interface 615.

Using the shared bus key, the decryption unit (encryption decoder) 618 of the PC recording device (drive) 600-2 decodes the received data. Writer 611 then records the data signal received from PC encoder 600-1 to RAM disc 612. Recording controller 619 controls recording to the RAM disc 612 so that data that must be recorded to a particular protected area, such as key data, is not written to the RAM disc 612 unless authentication of the PC encoder is successful.

A compliant device changes the authentication method and processing of the key data and data signal according to the disk type and the recorded data signal. Based on the signal reproduced by the reader 620, disk type detector 621 of PC recording device (drive) 600-2 identifies the physical characteristics (focus characteristics, tracking characteristics, playback characteristics) of the RAM disc 612, and identifies the disk type recorded to the control area of RAM disc 612. The results are then output to controller 622. It should be noted that it is possible for the data indicating the disk type to be modified in transmission, but such modification can be prevented by the method described further below. Controller 622 changes the authentication method and data transmission method according to the disk type for data communication with PC encoder 600-1.

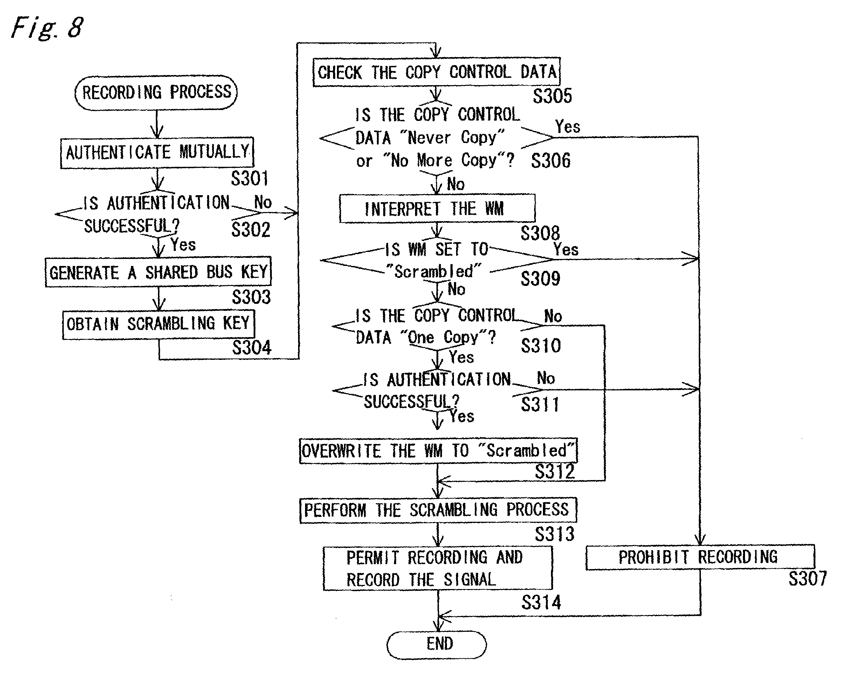

Operation of the PC encoder 600-1 and PC recording device (drive) 600-2 in this embodiment of a compliant PC recording system 600 is descried next. Fig. 8 is a flow chart of the process run by the controller 609 of the PC encoder 600-1 (Fig. 7).

Recording a "one copy" data signal is described first. The controller 609 (Fig. 7) tells authentication unit 613 to authenticate the PC recording device (drive) 600-2 with authentication unit 617 (step S301). Based on the result passed by authentication unit 613, controller 609 determines whether both devices are compliant (step S302). This makes it possible to confirm whether the devices are licensed before proceeding with recording.

If both devices are authenticated compliant devices, PC encoder 600-1 and PC recording device (drive) 600-2 generate a shared bus key (step S303). PC encoder 600-1 then obtains the key data generated by PC recording device (drive) 600-2 for scrambling (referred to below as the scrambling key) from PC drive 600-2 (step S304). The scrambling key is data that has been encrypted or processed by the PC drive 600-2 based on the shared bus key to prevent tampering.

The controller 609 of the PC encoder 600-1 (Fig. 7) then records the data signal according to the recorded process shown in Fig. 4 and described above (step S305 and after). Further description of this recording process is therefore omitted here.

This recording process differs from that shown in Fig. 4 in that a step S311 for checking whether authentication was successful is inserted after step S106 identifying the "one copy" setting (Fig. 4). Recording is prohibited when authentication is not successful in step S311.

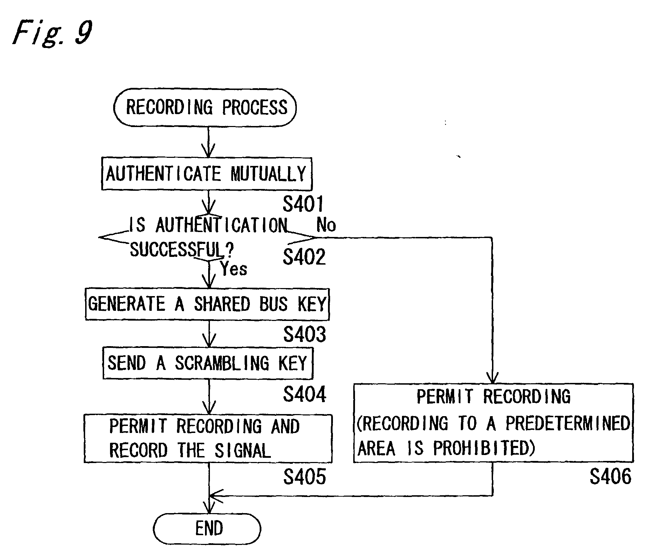

The operation of PC drive 600-2 (Fig. 7) is described next. Fig. 9 is a flow chart of the process performed by controller 622 of the PC drive 600-2 (Fig. 7).

As with the PC encoder 600-1, controller 622 tells authentication unit 617 to authenticate the PC encoder 600-1 with authentication unit 613 (step S401). Based on the result passed by authentication unit 617, controller 622 determines whether both devices are authenticated compliant (step S402).

If authentication was successful, controller 622 generates a shared bus key. Based on the shared bus key, controller 622 then encrypts or otherwise processes the scrambling key to prevent tampering, and sends it from PC drive 600-2 to digital interface 601 (S404). Access (recording and playback) to the scrambled data signal, the scrambling key, and the scrambling control data is then permitted, and recording is accomplished (S405).

If authentication was not successful, recording only the data signal is allowed, and recording the scrambling key and scrambling control data to a reserved area of the disc is prohibited (S406).

Therefore, if the PC encoder 600-1 and PC drive 600-2 are not both compliant, accessing the scrambling key and scrambling control data can be prevented. As a result, a digital watermark set to "scrambled" and the scrambled state of the data signal can be detected and copying enabled when recording a data signal for which the copy control data is set to "one copy" in a compliant PC recording system 600 comprising a compliant PC encoder 600-1 and a compliant PC drive 600-2. In addition, access to the specific area on disc is prevented and scrambling cannot be correctly completed in a non-compliant PC system in which either or both the PC encoder and PC drive are non-compliant.

### Personal computer as a playback device

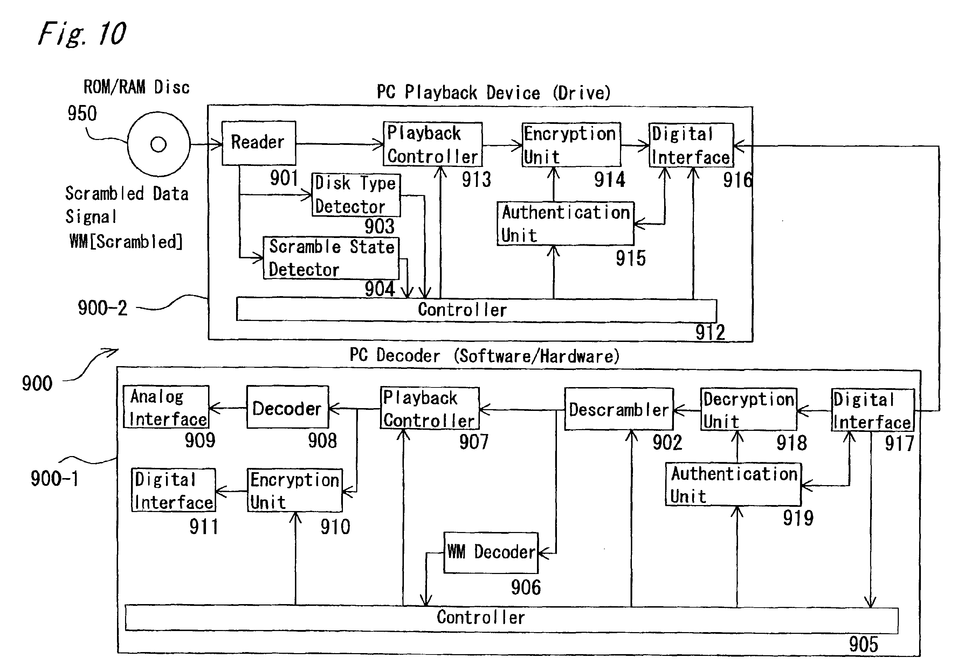

Fig. 10 shows a preferred embodiment of a compliant playback device achieved by a personal computer (PC) playback system 900. As shown in Fig. 10 the major components of this PC playback system 900 are a PC decoder 900-1 and PC playback device (drive) 900-2. A digital interface (such as SCSI, ATAPI, or IEEE 1394) capable of preventing illegal copying connects the PC decoder 900-1 and PC drive 900-2. The PC decoder 900-1 is equivalent to the components of a compliant player 101, 105 (Fig. 5) from the descrambler 402 (Fig. 5) to the interfaces 409, 411, and performs the same operations. Further description of like operation is therefore omitted below. The PC drive 900-2 is equivalent to the reader 401 (Fig. 5). The reader 901 reads the recorded data from the ROM/RAM disc 950 loaded into PC drive 900-2, and passes the read data to scramble state detector 904 and disk type detector 903. The scramble state detector 904 and disk type detector 903 detect the scramble flag and disk type in the same way as the compliant player 101, 105 (Fig. 5) described above.

If a scrambled data signal is output from digital interface 916, authentication unit 915 of PC drive 900-2 talks with authentication unit 919 of PC decoder 900-1 for mutual authentication. If authentication is not successful, playback controller 913 prohibits reading data from the PC drive 900-2. If authentication is successful, the descrambler 902 of the PC decoder 900-1 reads the data signal and applies a specific descrambling operation to the scrambled copy-prohibited data signal.

So that the key used for scrambling can be safely shared by the PC playback drive and PC decoder, authentication units 915, 919 are mutually authenticated by way of digital interfaces 916, 917.

If authentication is successful, authentication unit 915 and authentication unit 919 can each confirm that the other is a licensed device, that is, a compliant device. More specifically, if authentication is successful, a pass key for encrypting the data sent to the digital interface is also shared. Using this shared bus key, the encryption unit 914 of the PC drive 900-2 encrypts data requiring protection (such as the key data and data signal), and sends the encrypted data from digital interface 916 to PC decoder 900-1.

A compliant device changes the authentication method and processing of the key data and data signal according to the disk type and the recorded data signal. Based on the signal reproduced by the reader 901, disk type detector 903 identifies the disk type based on the physical characteristics (focus characteristics, tracking characteristics, playback characteristics) of the disc and data recorded to the control area of the disc. The result is then output to controller 912. The controller 912 changes the authentication method and data transmission method according to the disk type, and exchanges data with the PC decoder 900-1. The PC decoder 900-1 similarly changes the authentication method and data transmission method according to the data signal scrambling method and type of the disc to which the data signal to be played back is recorded.

The decryption unit (encryption decoder) 918 of PC decoder 900-1 then decodes the received data based on the shared bus key. The processes run from the descrambler 902 to the analog interface 909 and digital interface 911 are the same as in the compliant player 101, 105 (Fig. 5) described above, and further description is omitted here.

The controller 905 of PC decoder 900-1 controls playback using not only data signal scrambling information (whether the signal is scrambled and the scrambling method) and scrambling data encoded in the digital watermark, but also using the authentication method and data transmission method.

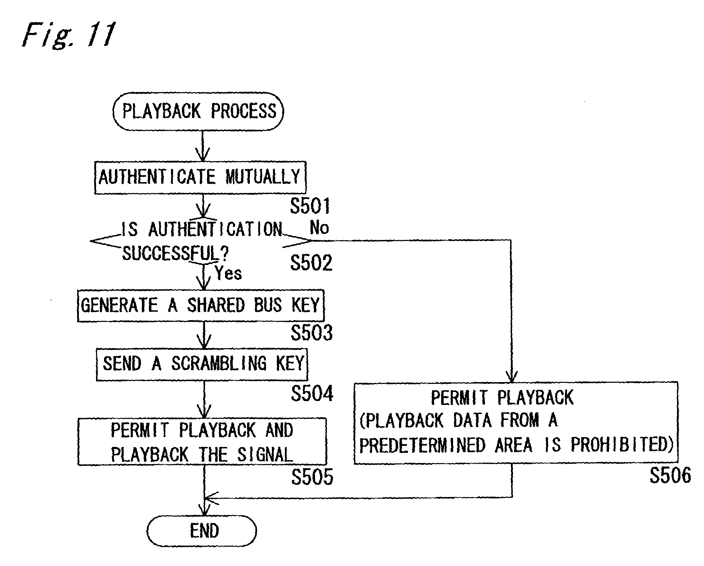

Operation of the PC decoder 900-1 and PC drive 900-2 in this PC playback system 900 is described next. Fig. 11 is a flow chart of the process of the controller 912 (Fig. 10) of the PC drive 900-2.

To reproduce a scrambled data signal recorded to the disc, controller 912 (Fig. 10) instructs authentication unit 915 to authenticate the PC decoder 900-1 with authentication unit 919 (step S501). Based on the result from authentication unit 915, controller 912 (Fig. 10) determines whether both PC decoder 900-1 and PC drive 900-2 are compliant devices (step S502). This makes it possible to confirm whether the devices are licensed before proceeding with recording.

If both devices are authenticated compliant devices, PC decoder 900-1 and PC drive 900-2 generate a shared bus key (step S503). Using this shared bus key, controller 912 encrypts or processes the scrambling key to prevent tampering, and then sends it from PC drive 900-2 to PC decoder 900-1 (S504). Access to the scrambled data signal, scrambling key, and scrambling control data is then allowed, and playback continues (8505).

If authentication is not successful in step S502, reproducing only the data signal is allowed, and reproducing data from a reserved part of the disc is prohibited (S506).

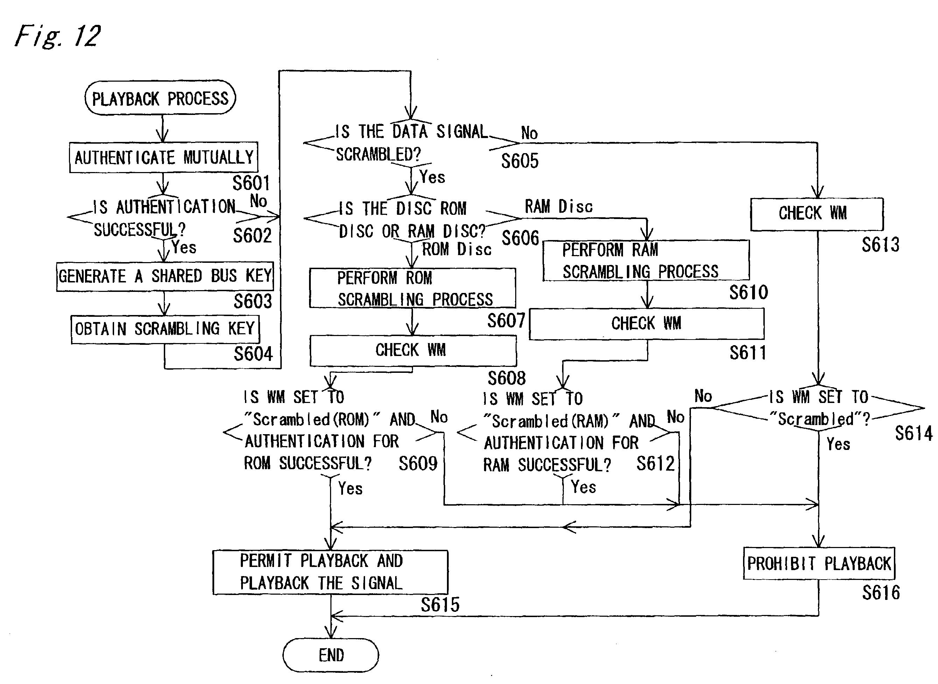

Fig. 12 shows the process of the controller 905 in PC decoder 900-1 (Fig. 10). As does the PC drive 900-2, controller 905 instructs authentication unit 919 to authenticate the PC drive 900-2 with authentication unit 915 to reproduce a scrambled data signal recorded to the disc (step S601). Based on the result from authentication unit 919, controller 905 (Fig. 10) determines whether both PC decoder 900-1 and PC drive 900-2 are compliant devices (step S602).

If both devices are authenticated compliant devices, PC decoder 900-1 and PC drive 900-2 generate a shared bus key (step S603). The PC decoder 900-1 then obtains the scrambling key generated by the PC drive 900-2 from PC drive 900-2 (S604).

The controller 905 of PC decoder 900-1 then reproduces the data signal according to the playback control flow shown in Fig. 6 (from step S605). This process is already described above, and further description thereof is thus omitted here.

This recording process differs from that shown in Fig. 6 in that steps (S609, S612) for checking whether authentication was successful for the disc are modified after step S202 (Fig. 6) identifying the disk type. If authentication appropriate to the disc type (ROM or RAM) is not successful, data signal playback therefrom is prohibited.

Access to the scrambling key and scrambling control data can therefore be prevented when both the PC decoder 900-1 and PC drive 900-2 (Fig. 10) are not compliant device. As a result, when reproducing a data signal for which the copy control data is set to prohibit copying, a PC playback system 900 comprising a compliant PC decoder 900-1 and a compliant PC drive 900-2 can detect if a data signal is descrambled and the digital watermark is set to "scrambled." It is therefore possible to prevent normal descrambling on a non-compliant PC system because key data cannot be reproduced from the reserved area on disc.

### Disc type transfer method

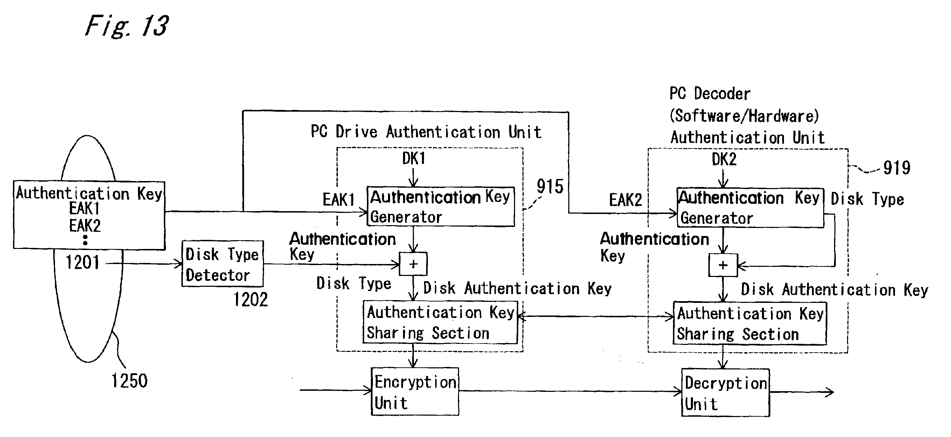

Referring next to Fig. 13, a method for transmitting data from the PC drive to an encoder or decoder so that the disk type data cannot be tampered with is described below. Fig. 13 shows the data flow when transmitting disk type data. The PC drive shown here can be PC drive 600-2 (Fig. 7) or PC drive 900-2 (Fig. 10).

A PC encoder or PC decoder permits data signal recording and playback using the disk type data. It is therefore necessary to transmit data indicating the disk type from the drive to the encoder or decoder without the data being tampered with and changed. As noted above, the PC encoder or PC decoder can be PC drive 600-2 (Fig. 7) or PC drive 900-2 (Fig. 10).

A authentication key 1201 used for authentication between the drive and encoder or decoder is recorded to disc 1250 in Fig. 13. This authentication key 1201 is a set of one or a plurality of encryption authentication keys (EAK1, EAK2, ...). An encryption authentication key uses a device key to encrypt the shared key used for mutual authentication (authentication key) and disk type data recorded to the authentication key. The device key is a key assigned to each device.

An example of an encryption authentication key is shown below.
EAK1 = ENC(device key (DK1), {authentication key (AK), disk type (DT)})
EAK2 = ENC(device key (DK2),{authentication key(AK), disk type (DT)})

PC drive authentication unit 915 reads the encryption authentication key (EAK1) assigned to the device from the authentication key data read from disc 1250, and decodes it using the internally stored assigned device key DK1. Authorization key (AK) and disk type (DT) are thus obtained. The PC drive then detects disk type (DT)' from the physical characteristics (focus characteristics, tracking characteristics, playback characteristics) of the loaded disc, and the control area where the disk type is stored. Mutual authentication is accomplished using disc authorization key (DAK'), which is obtained by applying a specific operation (shown as addition in Fig. 13) to disk type (DT') from disk type detector 1202 and authorization key (AK).

The PC encoder/PC decoder extracts the encryption authentication key (EAK2) assigned to the device from the authentication key data read from disc 1250, and decodes EAK2 using the internally stored assigned device key DK2 to obtain authorization key (AK) and disk type (DT). Mutual authentication is accomplished using disc authorization key (DAK), which is obtained by applying a specific operation (shown as addition in Fig. 13) to disk type (DT) and authorization key (AK).

Mutual authentication is thus accomplished using a shared disc authentication key. More specifically, authentication is successful when DAK = DAK', and is unsuccessful when DAK <> DAK'. In other words, when the DT value from the authentication key data does not match the disk type (DT') detected by the drive, authentication unit 915 and authentication unit 919 can fail the authentication attempt. As a result, even if key data or superimposed obtained from a ROM disc is illegally copied to a RAM disc, the disk type (DT) value in the authentication key data and the disk type (DT') detected by the drive will not match. Verification will therefore not be successful, and data signal playback can be prevented. Furthermore, even if the authentication key data is illegally changed, the authentication key and the disk type will not match, and mutual authentication will fail.

It will be remembered that the authentication key data has been described as recording an encrypted authentication key and disk type. It is also possible, however, to safely transmit the disk type without embedding the disk type in the authentication key data by encrypting the disk type detected by the drive and sending this encrypted disk type to the PC encoder or decoder. Normal signal data playback can therefore be achieved in practice. When the disk type cannot be contained in the authentication key data, mutual authentication will be common irrespective of disk type and mutual authentication will be successful irrespective of the disk type. However, even if mutual authentication succeeds, it is possible to prevent normal presentation of audio and video when the data signal is played back with the wrong disk type (scrambling method).

It is therefore possible to prevent playback of an illegal disc copy using a recorder and player as described above without providing a digital watermark WM detector and rewriter in the PC drive.

A process for changing the authentication method and data transfer method (procedure for sending the data and key) according to the disk type is described next. By reversing the use of these properties, a procedure for identifying the disk type from the steps of the authentication process is also possible. A system that can be used as a PC drive and PC encoder (Fig. 10) is described below.

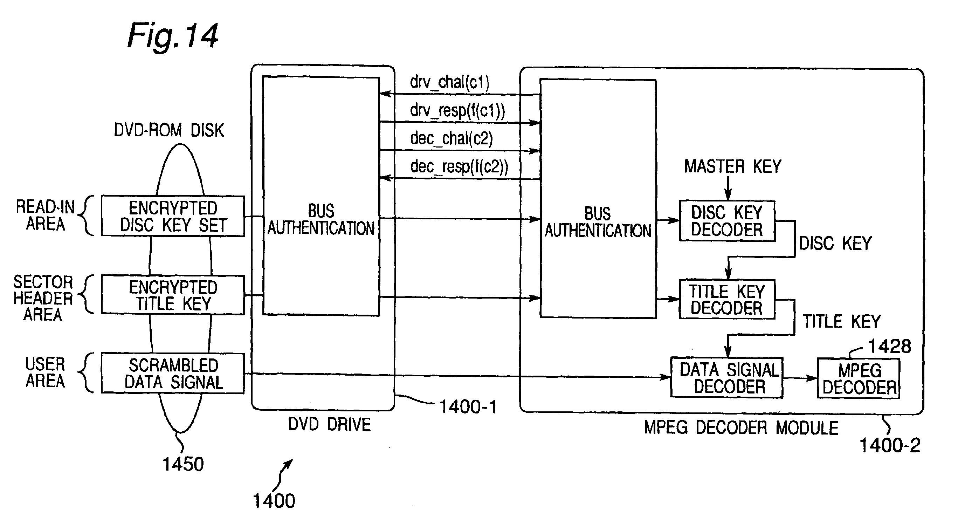

Fig. 14 shows the authentication process and data transfer process when playback system 1400 reproduces data from DVD-ROM disc 1450.

The bus authentication step is described first.

MPEG decoder module 1428 generates random number c1 and sets it to DVD drive 1400-1 as challenge data (drv_chal(c1)). DVD drive 1400-1 generates f(cl) using a confidential function f, and returns it to MPEG decoder module 1400-2 as response (drv_res(f(c1)). MPEG decoder module 1400-2 generates f(cl) using an internal confidential function f. MPEG decoder module 1400-2 then detects whether f(cl) matches the response data returned from DVD drive 1400-1, and MPEG decoder module 1428 confirms that DVD drive 1400-1 is a compliant device.

Next, DVD drive 1400-1 generates random number c2, and sets it to MPEG decoder module 1400-2 as challenge data (dec_chal(c2)). MPEG decoder module 1400-2 generates f(c2) using a confidential function f, and returns (dec_res(f(c2)) to DVD drive 1400-1 as the response. DVD drive 1400-1 then generates f(c2) using an internal confidential function f. DVD drive 1400-1 then checks whether f(c2) matches the response from the MPEG decoder module 1400-2, and the DVD drive verifies whether the MPEG decoder is a compliant device. DVD drive 1400-1 and MPEG decoder module 1400-2 thus share a confidential time-variant key.

The step for confidentially transmitting the key data using a time-variant key is described next.

Using a shared time-variant key DVD drive 1400-1 bus encrypts the encrypted disc key set and encrypted title keys recorded to the DVD-ROM disc 1450, and sends the encrypted data to MPEG decoder module 1400-2. MPEG decoder module 1400-2 then bus decodes using the shared time-variant key the received encrypted disc key set and encrypted title keys.

For decoding the scrambled data signal, MPEG decoder module 1400-2 decodes the scrambled data signal as shown in Fig. 2A using the bus-decrypted encrypted disc key set and encrypted title keys, and can thus obtain the data signal content.

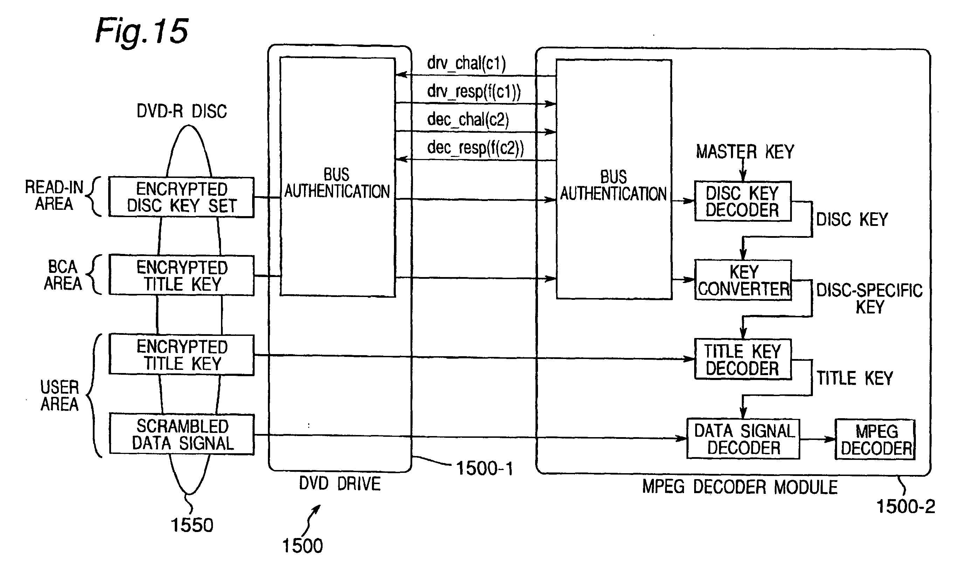

Fig. 15 shows the authentication process and data transfer process when playback system 1500 reproduces data from DVD-R disc 1550.

The bus authentication step is the same as the bus authentication step for playing DVD-ROM disc 1450 (Fig. 14). Further description thereof is thus omitted.

The step for confidentially transmitting the key data using a time-variant key is described next.

DVD drive 1500-1 bus encrypts the encrypted disc key set using the shared time-variant key, and applies a tamper check code to the media ID. The DVD drive 1500-1 then sends the encrypted disc key set and media ID to the MPEG decoder module 1500-2. MPEG decoder module 1500-2 bus-decrypts the received bus-encrypted encrypted disc key set using the shared time-variant key. The MPEG decoder module 1500-2 also checks the tamper check code assigned for the media ID using the shared time-variant key.

Decoding the scrambled data signal (content) is described next. MPEG decoder module 1500-2 reads the encrypted title keys and scrambled data signal (AV data) from the user area of DVD-R disc DVD-R disc 1550. MPEG decoder module 1500-2 decodes the disc key using the decrypted encrypted disc key set, and uses the disc key to decode the disc-specific key. The title keys are then decoded using the disc-specific key, and the scrambled data signal is descrambled using the title keys.

As described above, the transferred data and transfer procedure are different with DVD-ROM and DVD-R media because the keys and other data needed to decode the scrambled data signal are different for a read-only DVD (DVD-ROM disc) and a writable DVD (DVD-R disc). With these embodiments of the invention, the DVD drive detects the disk type and is controlled according to a corresponding transmission procedure. The MPEG decoder module identifies the disk type from the differences in the transmission procedures, and can restrict playback by comparing and detecting a match with the disk type superimposed in the digital watermark.

It should be noted that the same authentication process is used with read-only DVDs and writable DVDs shown in Fig. 14 and Fig. 15. However, the MPEG decoder module can identify the disk type from differences in the authentication process as described above if different authentication processes are used for read-only DVDs and writable DVDs. Different authentication methods can be achieved by, for example, using different algorithms (the above-noted function f), or by using different parameters in the same algorithm.

It will be further noted that while these embodiments have been described encrypting the data signal by scrambling, the same effects and benefits can be achieved using other encryption methods.

Furthermore, these embodiments of the invention have been described using an optical disc as the data storage medium. However, the same methods can be applied to other types of storage, including semiconductor memory and magnetic storage media (such as hard disks). Furthermore, the encrypted data signal of the present invention can be transmitted over the Internet or other network system (transmission medium). Illegal copying can be prevented in these cases by using the same authentication process described above on the sending and receiving sides.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An encrypted data signal encrypting a copy-controlled data signal, wherein the data signal contains superimposed thereto as a digital watermark identification data identifying the data signal as an encrypted signal.

2. An encrypted data signal as described in claim 1, wherein the data signal is either a "No more copy" signal or a "Never copy" signal.

3. An encrypted data signal as described in claim 1, wherein the digital watermark further contains type data indicating a type of data storage medium recording the encrypted data signal.

4. A data storage medium recording an encrypted data signal as described in claim 1.

5. A data storage medium as described in claim 4, further recording an encrypted first key and an encrypted second key,
the first key used for encrypting the data signal having a superimposed digital watermark, and
the second key used for encrypting the first key.

6. A data signal playback apparatus comprising:
a reader for reading an encrypted data signal from a data storage medium as described in claim 4;
an encryption state detector for detecting that the encrypted data signal read by the reader is encrypted;
a decryption unit for decrypting the encrypted data signal and extracting the data signal with superimposed digital watermark;
a digital watermark decoder for extracting the digital watermark from the data signal decrypted by the decryption unit, and identifying content of the identification data; and
a playback controller for comparing the state detected by the encryption state detector and the state indicated by the identification data detected by the digital watermark decoder, and prohibiting playback of the data signal if said states do not match.

7. A data signal playback apparatus as described in claim 6, wherein the encryption state detector determines the encrypted data signal is encrypted when the decryption unit can extract a data signal.

8. A data signal playback apparatus as described in claim 6, wherein the digital watermark further contains type data indicating a type of data storage medium recording the encrypted data signal;
the data signal playback apparatus further comprising a type detector for determining the data storage medium type, and
the playback controller permits data signal playback when the data storage medium type declared by the type data matches the data storage medium type identified by the type detector.

9. A data signal playback apparatus as described in claim 6, wherein the data storage medium further records an encrypted first key and an encrypted second key, the first key used for encrypting the data signal having a superimposed digital watermark, and the second key used for encrypting the first key, and
the decryption unit has a third key used for encrypting the second key and specifically assigned to the data signal playback apparatus,
decrypts the encrypted second key using the third key to obtain the second key,
decrypts the encryption first key using the second key to obtain the first key, and
decrypts the encrypted data signal using the obtained first key to extract the data signal with superimposed digital watermark.

10. A data signal playback apparatus as described in claim 8, comprising a drive device containing the reader, encryption state detector, type detector, and a first authentication unit;
a decoder containing the decryption unit, digital watermark decoder, playback controller, and a second authentication unit; and
an interface connecting the drive device and decoder;
wherein the first authentication unit and second authentication unit communicate through the interface, the first authentication unit verifies if the decoder is a compliant device, and the second authentication unit verifies if the drive device is a compliant device; and
the playback controller permits data signal playback when authentication by the first authentication unit and the second authentication unit is successful.

11. A data signal playback apparatus as described in claim 10, wherein the data storage medium further records a first authentication key and a second authentication key used respectively by the first authentication unit and second authentication unit;
the first authentication unit has a first device key assigned specifically to the drive device, and generates a first media authentication key based on the first authentication key, first device key, and data storage medium type detected by the type detector;
the second authentication unit has a second device key assigned specifically to the decoder, and generates a second media authentication key based on the second authentication key and second device key; and
the first authentication unit and second authentication unit compare the first media authentication key and the second media authentication key for authentication.

12. A data signal playback apparatus as described in claim 11, wherein the second authentication unit detects the data storage medium type using at least one of an authentication process and data signal transmission procedure that differs for each data storage medium type.

13. A data signal recording apparatus for recording a copy-controlled data signal to a data storage medium, comprising:
a digital watermark processor for superimposing to the data signal as a digital watermark identification data identifying the data signal as an encrypted signal;
an encryption unit for generating an encrypted data signal by encrypting the data signal to which the digital watermark processor superimposed a digital watermark; and
a writer for writing the encrypted data signal generated by the encryption unit to the data storage medium.

14. A data signal recording apparatus as described in claim 13, further comprising a type detector for detecting a data storage medium type;
wherein the digital watermark further contains type data detected by the type detector indicating a type of data storage medium recording the encrypted data signal.

15. A data signal recording apparatus as described in claim 14, further comprising a digital watermark decoder for extracting the digital watermark superimposed to the data signal and detecting the content indicated by the identification data; and
a recording controller for permitting recording based on the identification data detected by the digital watermark decoder.

16. A data signal recording apparatus as described in claim 15, comprising a drive device containing the writer, type detector, and a first authentication unit;
an encoder containing the encryption unit, digital watermark processor, digital watermark decoder, recording controller, and a second authentication unit; and
an interface connecting the drive device and encoder;
wherein the first authentication unit and second authentication unit communicate through the interface, the first authentication unit verifies if the encoder is a compliant device, and the second authentication unit verifies if the drive device is a compliant device; and
the recording controller permits data signal recording when authentication by the first authentication unit and the second authentication unit is successful.

17. A data signal recording apparatus as described in claim 16, wherein the data storage medium further records a first authentication key and a second authentication key used respectively by the first authentication unit and second authentication unit;
the first authentication unit has a first device key assigned specifically to the drive device, and generates a first media authentication key based on the first authentication key, first device key, and data storage medium type detected by the type detector;
the second authentication unit has a second device key assigned specifically to the encoder, and generates a second media authentication key based on the second authentication key and second device key; and
the first authentication unit and second authentication unit compare the first media authentication key and the second media authentication key for authentication.

18. A data signal recording apparatus as described in claim 17, wherein the second authentication unit detects the data storage medium type using at least one of an authentication process and data signal transmission procedure that differs for each data storage medium type.

19. A data signal recording apparatus as described in claim 13, wherein the data storage medium further records a second key encrypted with a third key assigned specifically to the data signal recording apparatus;
the encryption unit obtains the first key based on any of random numbers internally generated by the encryption unit, the first key recorded to the data storage medium, and first key data superimposed to a radio wave, and encrypts the data signal with superimposed digital watermark using the first key,
encrypts the first key using the second key; and
obtains the second key based on the third key and encrypted second key recorded to the data storage medium.

20. A data signal recording apparatus as described in claim 19, wherein the writer further writes the first key encrypted with the second key to the data storage medium.
